(19) **Europäisches Patentamt European Patent Office Office européen des brevets**

(11) **EP 4 314 112 B1**

(12) **EUROPEAN PATENT SPECIFICATION**

(45) Date of publication and mention
of the grant of the patent:
**06.05.2026 Bulletin 2026/19**

(21) Application number: **22717819.1**

(22) Date of filing: **25.03.2022**

(51) International Patent Classification (IPC):
*C08G 65/40* (2006.01)    *B01D 71/68* (2006.01)
*B29B 17/00* (2006.01)    *B29B 17/04* (2006.01)
*C08G 75/23* (2006.01)

(52) Cooperative Patent Classification (CPC):
**C08G 75/23; B29B 17/0026; B29B 17/04;
C08G 65/4056;** B01D 71/68; B29K 2081/06

(86) International application number:
**PCT/EP2022/057932**

(87) International publication number:
**WO 2022/207492 (06.10.2022 Gazette 2022/40)**

(54) **PROCESS FOR THE PRODUCTION OF PARTICLES COMPRISING POLYARYLENE (ETHER) SULFONE**

VERFAHREN ZUR HERSTELLUNG VON PARTIKELN MIT POLYARYLEN(ETHER) SULFONTEILCHEN

PROCÉDÉ DE PRODUCTION DE PARTICULES COMPRENANT UN SULFONE (D'ÉTHER) DE POLYARYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2021 EP 21166555**

(43) Date of publication of application:
**07.02.2024 Bulletin 2024/06**

(73) Proprietor: **BASF SE**
**67056 Ludwigshafen am Rhein (DE)**

(72) Inventors:
• **GRAESSEL, Georg**
**67056 Ludwigshafen (DE)**
• **WITT, Uwe**
**67056 Ludwigshafen (DE)**
• **GREENING, Giorgio**
**64342 Seeheim-Jugenheim (DE)**
• **KAYIHAN, Filiz**
**67056 Ludwigshafen (DE)**

(74) Representative: **BASF IP Association**
**BASF SE**
**GBI - Z078**
**67056 Ludwigshafen (DE)**

(56) References cited:
WO-A1-2018/137998    WO-A1-2020/053077
CN-A- 106 750 302    US-A1- 2016 152 776

**Description**

The present application relates to a process for the production of particles comprising polyarylene (ether) sulfone, to the particles comprising polyarylene (ether) sulfone, to the use there of, to the products that can be produced from the particles comprising polyarylene (ether) sulfone, and to a process for the recycling of the products produced from the particles comprising polyarylene (ether) sulfone.

Polyarylene (ether) sulfone polymers are high-performance thermoplastics in that they feature high heat resistance, good mechanical properties and inherent flame retardancy. They can therefore be used in a wide range of applications. Methods for their manufacture from aromatic bishalogen compounds and aromatic bisphenols or salts thereof in the presence or absence of a solvent are known. Polyarylene (ether) sulfones are biocompatible and thus are also used as material for shaped articles in the household and the food industry and in applications such as forming membranes for various uses in industrial and medical fields.

Agglomeration of polyphenylene ether powder, in particular poly-2,6-dimethyl-1,4-phenylene ether, in tableting presses or a compactor consisting of two counterrotating rolls and of a screw-based machine under pressures corresponding to a linear force of 1 to 100 kN/cm and temperatures from 10 to 150°C is disclosed in EP 548 683 A1 and EP 548 684 A1. Agglomeration of polyphenylene ether flakes, in particular semicrystalline polyarylene ethers, preferably polyarylene ether ketones at temperatures between 250 and 320°C is described in EP 640 640 A1. Further agglomeration of expanded sulfone polymer is disclosed in EP 3 573 800 B1.

WO 2020/053077 A1 discloses a sulfonated polyarylene ether sulfone based on diols which are derived from an anhydro sugar and one or more sulfonated dihalodiarylsulfones.

CN 106 750 302 A discloses a preparation method of novel heat-resisting and corrosion-resisting polyarylene sulfide sulfone with high molecular weight and relates to the field of high molecular materials.

US 2016/152776 A1 relates to a process for the production of a polyaryl ether sulfone polymer (P), comprising the following steps: (I) provision of a solution (PL) which comprises the polyaryl ether sulfone polymer (P) and comprises an aprotic polar solvent (L), (II) separation of the solution (PL) into droplets, (III) transfer of the droplets into a precipitation bath (F) which comprises water, with the result that the polyaryl ether sulfone polymer (P) is obtained in the form of particles, and (IV) isolation of the polyaryl ether sulfone polymer (P).

WO 2018/137998 A1 discloses a process for the production of a polymeric agglomerate obtained from expanded sulfone polymer recovered from extrusion or injection moulding processes of sulfone polymer, the agglomeration of said expanded sulfone polymer being effected in said process.

In many application sectors highly pure polyarylene (ether) sulfone is desirable. The problem addressed hereinunder is therefore to find a process for the manufacture of polyarylene (ether)sulfone with high or even very high purity. One aspect was to find a process of improved reliability at high throughput. In addition, highly pure polyarylene (ether) sulfone in a form that supports ease of manufacture of goods such as fibers, molded articles or membranes was sought. A particular motivation was to present polyarylene (ether) sulfone for the manufacture of thin-walled articles, inter alia feed bottles or filaments for use in membranes. In particular polyarylene (ether) sulfone with uniform processability was sought.

A process was found which is intended for the production of particles comprising polyarylene (ether) sulfone and which comprises the agglomeration of fine-particle material comprising polyarylene (ether) sulfone, where

(i) the moisture content of the educt (starting material), based on the total weight of the educt and determined on the basis of the moisture escaping from the educt heated to 160°C, is not more than 2% by weight,
(ii) the moisture content of the ambient air that is introduced from outside into the apparatus used for the agglomeration, determined with use of a hygrometer, is from 40 to 80%, and
(iii) the temperature of the ambient air, determined at the point of introduction of the ambient air into the apparatus, is from 15 to 35°C.

We have moreover found particles obtainable from the process according to the present invention comprising polyarylene (ether) sulfone where the C*-value, of said particles is below 15 and where the C*-value is determined by means of a CieLab Spin-measurement, and where at least 60% by weight of the particles has a grain size ($d_{50}$ value) in the range from 2 mm to 3.5 mm, determined from dynamic image analysis.

The term product particle is also used below for the particle obtainable from the process according to the present invention comprising polyarylene (ether) sulfone. The term educt is also used below for the fine-particle material comprising polyarylene(ether) sulfone.

The polyarylene (ether) sulfone can be one polyarylene (ether) sulfone or a mixture of various, for example two or more, polyarylene (ether) sulfones. The polyarylene (ether) sulfone is preferably amorphous. In the case of a mixture of various polyarylene (ether) sulfones, it is preferable that at least one is amorphous. Preference is given among the above to a mixture in which the proportion of amorphous polyarylene (ether) sulfone is more than 50% by weight, in particular more than 90% by weight, based on the mixture. Among the mixtures, particular preference is given to those that consist only of various amorphous polyarylene (ether) sulfones.

The person skilled in the art appreciates that any polymer, may it be a homopolymer or a copolymer by nature, typically is a mixture of individual polymeric entities differing in their constitution in terms of chain length, degree of branching or nature of terminal groups. Use of a mixture as above therefore implies that different types of polymers may be encompassed, where each type may have the difference in constitution addressed above.

It is preferable that one amorphous polyarylene (ether) sulfone is used in the present process.

The polyarylene (ether) sulfone particularly suitable for the present process is amorphous, i.e. is neither crystalline nor semicrystalline. Methods to determine the crystallinity of a polymer are well known to the person skilled in the art. It can typically be determined based on DSC measurements. In the case of the amorphous polyarylene (ether) sulfone it is not possible to detect any melting point by means of a DSC measurement. The glass transition temperature (Tg) of the amorphous polyarylene (ether) sulfone or the two or more Tg values for mixtures of polyarylene (ether) sulfones can be in the range of from 130 to 240°C. Usually an amorphous polyarylene (ether) sulfone or a mixture of two or more polyarylene (ether) sulfones with a melt viscosity of up to 1200 Pa s has/have a Tg or respectively a highest Tg of from 130 to 200°C, preferably from 160 to 200°C. An amorphous polyarylene (ether) sulfone or a mixture of two or more polyarylene (ether) sulfones with a higher viscosity usually has/have a Tg or respectively a highest Tg of from 200 to 240°C, preferably from 210 to 240°C. The method that can be used to determine the Tg is stated in the examples.

The constitution of the polyarylene (ether) sulfone which, as described above, is preferably amorphous is described in the following.

The polyarylene (ether) sulfone can be a homo- or copolymer. The copolymer can be a random or block copolymer. The polyarylene (ether) sulfone typically comprises -O- and -$SO_2$- groups, which link the arylene groups. It is also possible that it comprises further groups which link arylene groups, with the proviso that the polyarylene (ether) sulfone remains amorphous and does not become crystalline or semicrystalline. It is preferable that the polyarylene (ether) sulfone comprises only -O- and -$SO_2$- groups, which link the arylene groups. It is preferable that the arylene groups are phenylene groups or biphenylene groups. The arylene groups can have no substituent or can have one or more substituents, e.g. sulfonic acid groups. The polyarylene (ether) sulfone can comprise non-aromatic groups or blocks, alongside the arylene groups, the latter being preferably phenylene or biphenylene groups. Examples of blocks are those derivedfrom one or more alkylene ethers, for example ethylene oxide and/or propylene oxide. Included among the non-aromatic groups are by way of example those derived from an invert sugar, for example isosorbitol. It is preferable that the polyarylene (ether) sulfone is a polyphenylene sulfone (PPSU), a polysulfone (PSU) and/or a polyether sulfone (PESU); particular preference can be given here to a PPSU, a PSU or a PESU homopolymer. For many applications, in particular for the production of thin-walled items, it is preferable that the polyarylene (ether)sulfone is a PPSU homopolymer.

The polyarylene (ether) sulfone may have - depending on how it is produced - for example hydroxy, halogen, amino, epoxy or anhydride terminal groups, for example anhydride terminal groups derived from phthalic anhydride or 4-chloro-1,8-naphthalic anhydride. The polyarylene (ether) sulfone may also have terminal groups which are obtained by end-capping of reactive terminal groups with an end-capping agent, which can be a monofunctional compound such as methyl chloride. Among the terminal groups, preference is given to hydroxy, chlorine and/or methoxy. PPSU, PSU or PESU, in particular a PPSU, PSU or PESU homopolymer, and as described for many applications preferably a PPSU homopolymer containing one or more of said terminal groups such as hydroxy and chlorine or chlorine and methoxy terminal groups,can advantageously be used in the process disclosed herein.

The abbreviations PPSU, PESU and PSU in the context of the present disclosure conform to DIN EN ISO 1043-1 (Plastics - Symbols and abbreviated terms - Part 1: Basic polymers and their special characteristics (ISO 1043-1:2001); German version EN ISO 1043-1:2002).

The polyarylene (ether) sulfone preferably has a weight-average molar mass Mw of 10 000 to 150 000 g/mol, especially of 15 000 to 120 000 g/mol, more preferably of 18 000 to 100 000 g/mol, determined by means of gel permeation chromatography in a dimethylacetamide solvent against narrowly distributed polymethyl methacrylate as standard.

In addition, the polyarylene (ether) sulfone preferably has an apparent melt viscosity at 350°C/1150 s$^{-1}$ of 20 to 1200 Pa s, preferably of 50 to 700 Pa s. The method which can be used for determining the apparent melt viscosity is described in the examples. The apparent melt viscosity can be used to assess flowability.

Production processes which lead to the aforementioned preferably amorphous polyarylene (ether) sulfone are known per se to those skilled in the art and are described, for example, in Herman F. Mark, "Encyclopedia of Polymer Science and Technology", third edition, Volume 4, 2003, "Polysulfones" chapter on pages 2 to 8, and in Hans R. Kricheldorf, "Aromatic Polyethers"in: Handbook of Polymer Synthesis, second edition, 2005, on pages 427 to 443.

The educt is a fine-particle material comprising polyarylene (ether) sulfone.

In the case of most applications it is preferable that the educt comprises an amorphous polyarylene (ether) sulfone, preferably a polyphenylene (ether) sulfone (PPSU), a polysulfone (PSU) or a polyether sulfone (PESU), preference among these generally being given to a PPSU, PSU or PESU homopolymer or, as described above for many applications, a PPSU homopolymer.

The educt can have the form of a powder or of any other fine-particle material, for example flakes or flakes comprising powder. The particle size and particle size distribution of the educt can vary widely. By way of example, it is possible to use educt having the form of particles whose particle-size $d_{50}$ value is in the range from 0.2 to 5 mm, preferably from 0.5 to 4 mm. Educt having the form of particles whose particle-size $d_{50}$ value is in the range from 1 mm to 3 mm are generally particularly suitable for the present process, because they lead to high uniformity of conveying and thus minimize variations in the agglomeration process. The determination methods that can be used for the particle size of the educt are described in the examples.

The fine-particle material can comprise one or more additives alongside the polyarylene (ether) sulfone (and alongside usual smaller quantities of residual substances from its production). Insofar as the fine-particle material comprises one or more additives, the proportion of these is mostly not more than 10% by weight, based on the total weight of the fine-particle material. The fine-particle material often comprises, based in each case on the total weight of the educt, from 0 to 7% by weight, preferably from 0 to 5% by weight, of one or more additives and from 93 to 100% by weight, preferably from 95 to 100% by weight, of polyarylene (ether) sulfone, whereby PPSU, PSU and PESU are usually preferred, among which the corresponding homopolymersor, for many applications, PPSU homopolymer are generally particularly preferred.

The one or more additives in the educt can be solid or liquid, or liquid at the temperature at which the agglomeration takes place. In particular for the production of transparent product, forexample a film, foil or molding, for example thin-walled transparent molding, it is generally advantageous that the one or more additives is/are very well dispersed in the educt or in the product particles produced therefrom respectively. To this end, one or more of the additives is/are advantageously preferably fine-grained or liquid, with preference liquid or micronized. When the additive is to be added to the educt, the former can be added as such or in the form of a masterbatch. Examples of materials that can be used as additive are colorant materials, for example pigments, stabilizers, mold-release agents, flow aids, blowing agents and lubricants. In particular for uses of the product particles obtained by the process disclosed herein which entailblow-molding procedures, it can be preferable that the educt comprises stearic acid.

Insofar as the intention is to produce product particles that can be further processed to give transparent products, in particular to give a transparent film, foil or molding, the fine-particle material comprises no additive, i.e. the educt consists of polyarylene (ether) sulfone. Alternatively, the educt comprises one or more additives, in particular stearic acid, in a form that is homogeneously dispersed to such an extent that the one or more additives cause no haze in the product produced from the product particles.

In the case of production of high-purity product particles intended for further processing to give a product in which purity is of particular importance, it is most preferable that the educt comprises no additives. In this case it is in addition preferable that the educt has a purity grade of 1 or 2, in particular a purity grade of 1. The purity grade can be determined by optical assessment using a filter test. The method which can be used is stated in the examples.

The agglomeration of the educt is carried out within an operating range defined via

    (i) the moisture content of the educt,
    (ii) the moisture content of the ambient air and
    (iii) the temperature of the ambient air.

Within the operating range it is possible to reduce, or entirely eliminate, the tendency of the educt toward caking.

The educt can be used in dried or partially dried form. Although moisture in the educt can be below the detection threshold, it is typically possible to detect a certain quantity of moisture in the educt. The moisture content of the educt is typically at least 0.02% by weight, based on the total weight of the educt. The moisture content can be residual moisture deriving from the process for production of the polyarylene (ether) sulfone. However, it can also be moisture deriving from conditions of storage of the polyarylene (ether) sulfone or can be both. The moisture content can be water and/or a solvent, for example a solvent used during the production of the polyarylene (ether) sulfone. It is generally preferable that the educt comprises not more than 2% by weight of moisture, in particular not more than 1% by weight, based on total weight of the educt. The method that can be used to determine the moisture content of the educt is stated in the examples.

The ambient air is the air that is introduced into the apparatus from outside. This can by way of example be room air and which for the process, is introduced by pressure or by suction; it is generally preferable here that the ambient air is introduced by suction. It is generally particularly advantageous that the ambient air introduced into the apparatus, in particular introduced by suction, has been purified. Processes and means for this purpose are known to a person skilled in the art. By way of example, the ambient air can be passed through a filtration apparatus. Filter such as candle filters are suitable for this purpose. The filter fineness can be fine or veryfine, but the apparatus cost for filter fineness values substantially below 1 μm mostly excludes the industrial-scale use of such filters. Good purification of the ambient air can generally be achieved by a filter with a filter fineness value of 20 μm or below. Filters with filter fineness values of 10 μm or below, for example in the range from 1 to 5 μm, can preferably be used.

In the case of moisture content of the educt that is not more than 2% by weight, based on the total weight of the educt, with a temperature of the ambient air of 15°C to 35°C, the moisture content of the ambient air can be in the range from 40 to 80%. In the case of a moisture content of the educt of 0.2 to 0.5% by weight, based on the total weight of the educt, it can be preferable to perform the agglomeration at a lower temperature and with a lower moisture content of the ambient air. Advantageous conditions can therefore be a temperature of the ambient air of 15°C to 25°C and a moisture content of the ambient air in the range from 40 to 70%, in particular a temperature of the ambient air from 15°C to 25°C and a moisture content of the ambient air in the range from 40 to 60%. The moisture content of the educt can be determined by the method described in the examples. The temperature of the ambient air and the moisture content thereof can be determined by the method described in the examples.

An advantage of the process measures disclosed here consists in access to product particles without caking. It is likewise possible to reduce or eliminate corrosion. Even at high throughput, the process can be carried out reliably.

The educt is agglomerated by means of the present process. The educt, which is generally initially preferably at ambient temperature, is heated for the agglomeration and/or during the agglomeration. The material-temperature during the agglomeration is from 180 to 240°C. It is preferable that the material-temperature during the agglomeration is in the range from 210 to 240°C. An amorphous polyarylene (ether) sulfone that has terminal hydroxy groups or has substituents on the arylene groups or has non-aromatic groups or blocks is generally preferably agglomerated at a material temperature in the range just above 180°C, for example from 190 to 220°C. The material-temperature here can be determined by the method described in the examples. If the material-temperature is below 180°C, viscosity increases can occur which make the agglomeration more difficult or impossible. If the material-temperature is above 240°C, the material can cake. It is also possible to obtain dark-colored product. The product can moreover have a high proportion of fines and/or a relatively high proportion of non-uniform, sharp-edged particles. This can have an adverse effect on free-flow properties for subsequent further processing, and/or can require an appropriate separation or return procedure.

The agglomeration typically takes place in an apparatus which comprises at least one agglomeration tool in which the educt is subjected to motion. The agglomeration apparatus generally comprises one agglomeration tool. It is also possible that the agglomeration is carried out in more than one apparatus which can be operated simultaneously or - particularly in a batchwise-operated process - at a different time. This allows for example performance of the agglomeration in one apparatus while at the same time another apparatus is maintained, for example cleaned. It is moreover possible after feeding all of the educt in one apparatus to feed further educt into a further apparatus while the process in the first apparatus still continues. However, it is also possible to add the educt into all apparatuses simultaneously and to also carry out simultaneous agglomeration in the apparatus.

The process disclosed herein can be carried out using equipment made of materials typical in chemical industry such as stainless steel, duplex-steel, titanium, Hastelloy or hard metal. In the above context, depending on the purpose for which the equipment is used, and as the person skilled in the art appreciates, it is possible that a certain part of the equipment may be made of a material different from that of other parts of the equipment.

The temperature of the apparatus used for the agglomeration allows the material-temperature to be reached during the agglomeration. The temperature of the apparatus used for the agglomeration depends inter alia on the intended duration of the agglomeration and/or on the properties of the polyarylene (ether) sulfone comprised in the educt. It is likewise possible that the frictional heat produced by the apparatus during the agglomeration contributes to the attainment of the material-temperature. The temperature of that area of the agglomeration tool used for the agglomeration that comes into contact with the material during the agglomeration is generally preferably in the range from 200 to 240°C.

Apparatuses for the agglomeration of thermoplastics are known per se. In the present process it is possible by way of example to use a plate compactor in which the educt is subjected to outward motion between two plates (for example as in DE 1 454873 or DE 1 454 875). It is also possible to use an apparatus comprising at least one agglomeration tool which is a hollow chamber, such as a hollow cylinder with an element rotating therein. The educt can by way of example be agglomerated in an agglomeration chamber in which it is subjected to motion by means of a rotating compressor blade and is discharged through a perforated die (as disclosed by way of example in EP 373 372). An apparatus that may also be mentioned by way of example and can be used in the present process is a compression chamber known, for example, from DE 10 2005 018 733. The apparatus for the agglomeration generally comprises means suitable for the comminution of the discharged material, for example blades, a laser beam or a water jet.

In the interests of reliability and improved throughput it is preferable that the educt is transported to the agglomeration tool by way of a conveying screw whose flight depth for a throughput of 250 kg/h is at least 5 mm. The flight depth for a throughput of 250 kg/h is typically up to 15 mm. A conveying screw with smaller or greater flight depth can be used for this throughput, but, even when educt whose particle size ($d_{50}$) is in the range from 1 to 3 mm is used, can lead to irregular conveying and to loss of uniformity of product particles. A conveying screw with a flight depth in the range of from 8 to 12 mm (throughput 250 kg/h) is advantageous because it contributes to uniformity of conveying and to greater uniformity of product particles. On the basis of the above, the person skilled in the art will be able to select a conveying screw with appropriate flight depth for smaller or greater throughputs. It is preferable that the conveying screw is designed for the processing of high-volume flowable solids and/or for flowable solids with low bulk density. Preference is generally given, among the above, to a conveying screw which has a flight depth from 8 to 12 mm (throughput 250 kg/h) and which is designed for the conveying of flowable solid with a density in the range from 100 to 350 kg/m$^3$. It can in particular be preferable to use a conveying screw with a flight depth from 8 to 12 mm (throughput 250 kg/h) which is designed for the conveying of flowable solid with a density from 150 to 300 kg/m$^3$.

The process disclosed herein can comprise, that the product particles obtained via agglomeration of the educt in the apparatus(es) comprising an agglomeration tool are compacted and homogenized in one or more further apparatuses. For this purpose, the product particles obtained from the agglomeration tool can then for example be transported to a hot granulator and can be processed there to give granulate. This is mostly not preferred. It is preferable that after the product particles have been removed from the agglomeration apparatus they are cooled and provided for a use without further compaction or homogenization. The process disclosed herein can moreover comprise one or more further apparatuses. The process can by way of example, if necessary, comprise one or more apparatuses which can separate the product particles from dust particles. An example of this type of separator apparatus is a sifter. It is generally preferable not to use this type of separator apparatus.

The educt is agglomerated in the present process to give product particles. The product particles therefore consist, in terms of their chemical composition, of educt. If the composition of the product particles deviates at all from the composition of the educt, it could do so only to a small extent by virtue of very small introductions of material resulting from the technology of a process. In respect of description of the chemical composition of the product particles, reference is therefore made to the description of the educt.

The product particles are light colored or very light colored to essentially or entirely colorless. A measure for the color of the product particles is the chroma-value, C*. The C*-value is zero for non-colored material. The product particles have a C*-value of below 15, determined by Spin-measurements according to CieLab. Product particle comprising polyarylene (ether) sulfone with a higher glass transition temperature Tg often have the tendency to be more colored than those with a lower Tg. Product particles comprising polyarylene (ether) sulfone which have a glass transition temperature or a highest Tg of a mixture of various polyarylene (ether) sulfones, from 200°C to 240°C tend to have a C*-value in a range of 15 and slightly or somewhat below 15, determined by Spin-measurements according to CieLab. Typical values could for instance be from 12 to 15. Product particles comprising polyarylene (ether) sulfone which have a glass transition temperature or a highest Tg of a mixture of various polyarylene (ether) sulfones, from 130°C to 200°C tend to have a C*-value which is smaller or much smaller than 15, determined by Spin-measurements according to CieLab. Typical values could for instance be from 8 to 12. The description of the method that can be used for determining the C*-value is given in the examples.

The product particles have an average grain size that is above the particle size of the educt. More than 60% by weight of the product particles have a grain size whose $d_{50}$ value is in the range from 2 mm to 3.5 mm, preferably from 2.5 to 3.5 mm, particularly preferably in the range from 3 to 3.5 mm. The description of the method that can be used for determining the $d_{50}$ value by means of dynamic image analysis is stated in the examples.

The product particles moreover also have a bulk density that is above the bulk density of the educt. The bulk density of the product particles is generally in the range from 400 to 600 kg/m$^3$. The method which can be used to determine the bulk density is stated in the examples. Product particles with this bulk density have good properties relating to storage, conveying and transport.

The product particles generally have a rounded, oval, to some extent ovoid shape. The product particles can be characterized by means of the Hausner factor. The product particles preferably have a Hausner factor from 1.05 to 1.3 in particular from 1.05 to 1.2, particularly preferably from 1.05 to 1.18. The Hausner factor here can be determined as stated in the examples. Preference is generally given to product particles which in addition have a sphericity of 0.6 to 1.0 preferably from 0.7 to 1.0 more preferably from 0.8 to 1.0. The method which can be used to determine the sphericity is stated in the examples. It is usually in particular preferable that the particles also have a Feret diameter of from 0.6 to 1.0 preferably from 0.7 to 1.0 and more preferably from 0.8 to 1.0. Product particles with a combination of the above-stated Hausner factor, sphericity and Feret diameter are therefore generally preferred. Such product particles exhibit friction between the bulk solid and a surface as well as internal friction, which renders the product particles suitable for molding processes such as injection molding, blow molding or injection stretch blow molding. The product particles are particularly suitable for blow molding and injection stretch blow molding. In particular, thin-walled moldings can mostly be advantageously produced from the product particles by blow molding or stretch blow molding.

The product particles preferably have an SO$_2$-content that is less than 40 mg/kg. This is advantageous because during processing of the product particles it is possible to minimize damage to the equipment due to corrosion. The method which can be used to determine the SO$_2$-content is stated in the examples.

Particularly when educt of purity grade 1 or 2, in particular of purity grade 1, is used in the process, it is possible to attain high-purity product particles by means of the present process. The purity grade can be determined as stated in the examples. High-purity product particles preferably comprise no additives. High-purity product particles are suitable by way of example or the production of a foil or of a film, foam or molding in the food sector. In particular, high-purity product particles are suitable for the production of thin-walled moldings, among which preference is given to those that are intended to be sterilizable and/or are highly transparent.

For the further processing of the product particles, for example in the injection molding process, extrusion process and blow molding process, it can be advantageous to minimize the residual moisture content. Residual moisture content is typically only water, but minor quantities of the residual solvent can be present, retained from the educt. In relation to the above, it is generally preferable that the residual moisture content of the product particles is less than 0.5% by weight, in particular less than 0.1% by weight, based on the total weight of the product particles.Although it is possible that the residual moisture content of the product particles is below the detection threshold, it is typically possible to detect residual moisture content in the product particles. The residual moisture content is generally 0.1% by weight or above, e.g. can be from 0.15 to 0.5% by weight, based in each case on the total weight of the product particles. The method that can be used to determine the moisture content of the product particles is stated in the examples.

The product particles disclosed herein can be processed by standard processing machinery for granulate processing, in particular because they have in essence the same shot weight as granulate, and therefore the intake time and the throughput in essence correspond to those of granulate.

The product particles disclosed herein can be used for the production of a coating, of a film, offoam, of a foil, a membrane, or of a molding. In particular, the particles can be used for applications in which transparency, high purity and/or pale intrinsic color are important. The particles can moreover advantageously be used for applications that are thin-walled or very thin-walled. A problem specifically arising during the production of thin-walled or very thin-walled moldings is that the injection-molding material used has a tendency toward gel defects. Surface defects such as gelling can often be reduced or eliminated when the product particles are usedin the production of such moldings.

Also disclosed are a coating, a film or foam, a foil or membrane, or a molding, where these areproduced with use of product particles. A molding can by way of example be a thin-walled or very thin-walled molding. Such a very thin-walled molding can by way of example be a hollow fiber. A relevant molding is typically one that, in respect of at least 50% of its surface, based on the total surface area of the molding, is composed of one or more walls whose wall thickness is below 2 mm. A molding preferred for many applications is one that, in respect of at least 50% of its surface, based on the total surface area of the molding, consists of one or more walls whose wall thickness is in the range from 0.3 to 1.7 mm, in particular in the range from 0.5 to 1.5 mm. The range of variation of wall thickness here is generally small. The method that can be used to determine the wall thickness is stated in the examples.

A foam, a foil or a molding produced with the use of product particles can be recycled under the conditions described above the production of the product particles. A process for the recycling of a foam, of a foil or membrane, or of a molding is also therefore disclosed, and comprises the production of comminuted material therefrom and agglomeration to give recyclate particles. The process is advantageous for recycling in particular when the material that is to be recycled is ofa single type. It is particularly preferably possible to use edge trim that derives from the process to produce a coating, a foam, a foil or membrane, or a molding, where these are produced with use of particles. A process is therefore also disclosed for the recycling of such edge trim, comprising the production of comminuted material therefrom and agglomeration to give recyclate particles.

By means of the process disclosed here it is possible to produce product particles which havevery good suitability for the production of transparent or highly transparent films, foils or moldings, inter alia because additives, for example stearic acid, can often be more successfully homogeneously incorporated than in a secondary compounding procedure.

The method disclosed herein can moreover yield particles which have a low $SO_2$-content and can have a lower $SO_2$-content than granulate containing the respective polyarylene (ether)^sulfone. Although $SO_2$-content usually decreases over time, the particles exhibiting a low $SO_2$- content can be used without prolonged storage times. In particular when the field of use encompasses metallization, surface defects can be avoided by the use of said particles whichhave a low $SO_2$-content.

The product particles produced by means of the process disclosed generally exhibit uniform processing properties.

Examples

Method of determination

Ambient air

The moisture content at the ambient temperature was measured by means of a hygrometer located one meter above the point of suction of the ambient air.

The temperature of the ambient air was measured by means of a thermometer directly at thepoint of suction of the ambient air (PT 100).

Apparent melt viscosity

The apparent melt viscosity was determined by means of a capillary rheometer. The apparent viscosity was determined at 350°C as a function of the shear rate in a capillary viscometer (Göttfert Rheograph 2003 capillary viscometer) with a circular capillary of length 30 mm, a radius of 0.5 mm, a die inlet angle of 180°, a diameter of the reservoir vessel for the melt of 12 mm and with a preheating time of 5 minutes. The values reported are those determined at1150 s$^{-1}$.

Bulk density of the particles

The bulk density of the particles was determined according to DIN EN ISO 60 (January 2000).

C*-values

A spectral colorimeter (Data color SF 600) with an integration sphere and d8 measurement geometry was used. The color measurements were carried out against a white calibration standard with SPIN (Specular included) setting on test plaques (injection-molded test samples 60x60x3mm). The color coordinates were computed in the CieLab color-coordination systemusing light type D65 and 10° normal observer according to DIN6174, 1979_01.

Glass transition temperature

A sample of the material was heated from 20°C to 350°C at a heating rate of 20 K/min (1st heating). After cooling the sample to room temperature, the sample was heated again to 350°C at a heating rate of 20 K/min (2nd heating). The DSC trace of the 2nd heating for the amorphous polyarylene (ether) sulfones exhibits just one glass transition (Tg) or, in the case of mixtures of different amorphous polyarylene (ether) sulfones, two or more glass transitions (Tg), but no melting endotherm.

Hausner ratio

The Hausner ratio was calculated by using the quotient of the tamped density ptamped (according to DIN ISO 787-11 DE, October 1995) and the bulk density $p_{untamped}$ (according to DIN EN ISO 60 DE, January 2000) (in each case 2500 cycles)

$$f_H = \frac{\rho_{tamped}}{\rho_{untamped}}$$

The Hausner ratio characterizes not only the flowability and compressibility of bulk solids but also the uniformity of the particles regarding size, shape, hardness and above all adhesion.

Material-temperature during the agglomeration

The material-temperature was measured with an infrared thermometer (testo 830-T2) directly at the location of production of the particles.

Moisture content of the educt and of the product

Moisture content was determined by evaporation of the moisture from a sample and titration of the moisture collected. Moisture content was determined here by using Metrohm KF-852 Titrando equipment. About 0.1 g (with accuracy of 0.001 g) of the sample were weighed into a 5 ml ampoule on an analysis balance. Sealing pincers were used to seal the ampoule. The ampoule was placed into an apparatus which had been heated to 160°C, where a needle was used to puncture the membrane and the cap seal. The evaporated moisture was entrained by an air stream (gas flow rate 60 ml/min), which passed into the titration cell. Titration was continued until no further moisture escaped from the ampoule. The data are stated in % by weight, based on the mass of educt or product.

Molar mass

The weight-average molar mass Mw and the number-average molar mass were determined by gel permeation chromatography against PMMA standard in DMAC as solvent.

Particle size of educt and grain size, sphericity and Feret diameter of product particles

The particle size of the educt and the grain size ($d_{50}$ value), sphericity and Feret diameter of the product particles were determined according to ISO 13322-2 (2006) by means of dynamic digital image processing, with measurement in free fall. The equipment used to determine the variables here was a Camsizer XT. These variables can be determined by utilizing the maximal chord of a particle projection. The maximal chord $x_c$ means the longest dimension of the particle projection perpendicularly to the direction of measurement. The minimal chord $x_{cmin}$ is the shortest of all of the maximal chords measured from all of the measurement directions of a particle projection. $x_{cmin}$ was used for the elemental fitting of the software of the measurement equipment used here. The Feret diameter here is the ratio xFeretmin / xFeretmax . The sphericity is a measure of the roundness of a particle. The value 1 corresponds to an ideal spherical shape. The sphericity can be calculated by using the measured circumference U and the measured area A of a particle projection:

$$SPHT = \frac{4\pi A}{U^2}$$

Purity grade of the educt

20 g of the material to be tested were dissolved, under nitrogen and with stirring, in 100 ml of filtered sodium-hydroxide-free N-methyl-2-pyrrolidone at 100°C. A water pump was used to draw the solution through a paper filter (black-ribbon filter, e.g. MN 640 w, Ø 70 mm). A template was then used for visual determination of the size of the dirt spots visible on the paper filter. The number of the dirt spots was determined by counting, and the dirt spots were categorized here by their size. The following formula was used to determine the comparative dirt-spot area:

Dirt [mm$^2$] / 20 g = $\sum$ (Number of Spots x Size according to Size Class [mm$^2$]) / 20 g

The results of the test were used to classify the purity of the material into 3 categories:

| | |
|---|---|
| smaller than 0.1 | purity grading 1 (particularly preferred) |
| from 0.1 to 0.2 | purity grading 2 (preferably suitable) |
| above 0.2 or filter covered | purity grading 3 (unsuitable) |

Sulfur dioxide content of the particles

The $SO_2$ content of the particles was determined by headspace GC/MS of chloroform solutions.

Viscosity number

**[0073]** The viscosity number was determined in 0.01 g/ml phenol / 1,2-dichlorobenzene 1/1) according to ISO 307, 1157, 1628, 2019.

Wall thickness

The wall thickness is determined according to DIN EN ISO 16810 2014-7-1.

PPSU used in inventive examples 1 and A1 and in comparative examples V1 and VA1

A polyphenyl sulfone homopolymer (PPSU) was used. The PPSU was completely amorphous and had a glass transition temperature Tg of 220°C, a weight-average molar mass (Mw) of 45 500 g/mol, an Mw/Mn value of 2.7, and a viscosity number of 71 cm$^3$/g (Ultrason® P from BASF).

PESU used in inventive example A2 and in comparative example VA2

A polyarylene ether sulfone homopolymer (PESU) was used. The PESU was completely amorphous and had a glass transition temperature Tg of 225°C, a weight-average molar mass (Mw) of 48 000 g/mol, an Mw/Mn value of 2.7, and a viscosity number of 56 $cm^3$/g (Ultrason® E from BASF).

Inventive example 1

PPSU was used as educt, without additives. The educt had a moisture content of 0.05% by weight and had a $d_{50}$ particle size of 2513 $\mu$m. Educt of purity grading 1 was used, without additives.

Educt was charged by way of a pneumatic conveying system to the feed container of the agglomeration apparatus. A conveying screw (flight depth 10 mm; throughput 250 kg/h) was used to convey the educt from the feed container of the agglomeration apparatus to the agglomeration implement. The agglomeration implement used was an agglomeration chamberin which the educt was subjected to motion by means of a rotating compressor blade, discharged through a perforated die, and chopped by means of a rotating blade (Pallmann Plastagglomerator PFV 250/20). The temperature of the perforated die was from 235 to 245°C. The moisture content of the ambient air was 73%, and the temperature of the ambient air during the agglomeration was 28 $\pm$ 2°C.

Product particles were obtained with a grain size of 2881 $\mu$m ($d_{50}$ value), a bulk density of 490 kg/$m^3$, a Hausner factor of 1.02, and a sphericity of 0.767, and a b/13 value of 0.672. The glass transition temperature of the PPSU was unchanged at 223°C. The C*-value was 11.65. The purity grading was likewise unchanged at 1, and the residual moisture content was below 0.02%.

Comparative example V1

Educt used was as stated in inventive example 1 and differed from that used in inventive example 1 only in its moisture content. The moisture content of the educt was 0.25%.

The conditions for the agglomeration differed from those used for the production of the product particles only in the temperature of the perforated die, which was 250 to 260°C, the moisture content of the ambient air, which was 87%, and the temperature of the ambient air, which was 19°C.

The resultant product particles had a particle size ($d_{50}$) of 3062 $\mu$m, a sphericity of 0.732, a Feret diameter of 0.656, and a bulk density of 467 kg/$m^3$.

Inventive application example A1 and comparative example VA1

An injection-molding machine with a locking force of 300 t and a screw diameter of 50 mm (Krauss-Maffei KM300/1400-C2) was used to injection-mold bowls (mold 3.5: dimensions: d top = 280 mm, d bottom = 115 mm, h = 110 mm, wall thickness: 2.8 mm, central gate, cold runner, shot weight: 318 g).

The PPSU homopolymer product particles obtained in inventive example 1 were used.

A granulate made from the PPSU described in inventive example 1 was used for comparison.

The granulate had a particle size ($d_{50}$) of 3282 $\mu$m, a sphericity of 0.943, a Feret diameter of 0.847 and a bulk density of 760 kg/$m^3$. The C*-value of the granulate was 23.

| Molding Parameters | Comparative example VA1 | Inventive example A1 |
|---|---|---|
| | Granulate | Product particles |
| Cycle time [sec] | 80 | 90 |
| Metering time [sec] | 44 | 55 |
| Screw rotation rate [m/s] | 0.29 | 0.29 |
| Melt temperature | 390 | 390 |
| Comment | clear, no streaks | good intake behavior, no variations in metering time, clear |
| • Base for average value: 30 shots<br>• Screw rotation rate (m/s); standard = 100 rpm = 0.29 m/s | | |

Inventive application example A2 and comparative examples VA2 and VA3

An injection-molding machine with a locking force of 100 t and a screw diameter of 25 mm (Demag Systec 100/420-200) was used to injection-mold T7/2 mm flow spirals (precisely: T7.6.2) with a spiral width of 10 mm, a thickness of 2 mm and open length (central gate, cold runner, shot weight 46.5 g).

Inventive example A2 used product particles agglomerated by the process disclosed here. The product particles comprised no additives. The bulk density was 483 kg/m$^3$.

The resultant product particles had a particle size ($d_{50}$) of 3080 $\mu$m, a Hausner factor of 1.13, a sphericity of 0.726, a Feret diameter of 0.642, and a bulk density of 483 kg/m$^3$.

Comparative example VA2 used PESU in the form of flakes of bulk density 290 kg/m$^3$.

Comparative example VA3 used PESU as granulate with a particle size ($d_{50}$), a sphericity, and a Feret diameter, and also a bulk density corresponding in essence to the granulate used in comparative example VA1.

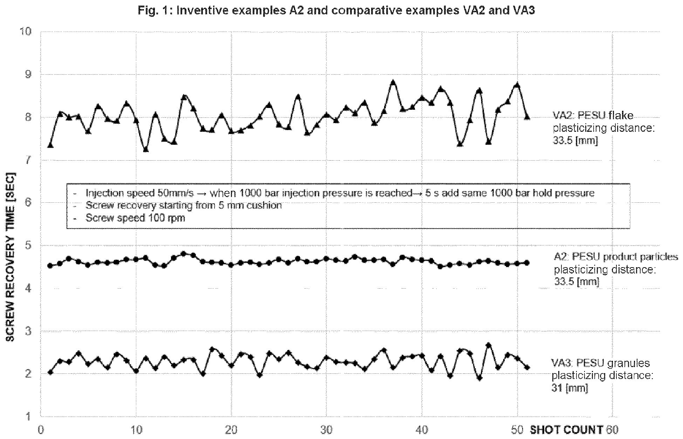

Figure 1 shows that the product particles exhibited significantly smaller variations in the metering times, both in comparison with the flakes, and in comparison with the granulate, i.e. the product particles had more uniform processability.

**Claims**

1.  A process for the production of particles comprising polyarylene (ether) sulfone, comprising the agglomeration of fine-particle material comprising polyarylene (ether) sulfone (educt), where

    (i) the moisture content of the educt, based on the total weight of the educt and determined on the basis of the moisture escaping from the starting material heated to 160°C, is not more than 2% by weight,
    (ii) the moisture content of the ambient air that is introduced from outside into the apparatus used for the agglomeration, determined with use of a hygrometer, is from 40 to 80%, and
    (iii) the temperature of the ambient air, determined at the point of introduction of the ambient air into the apparatus, is from 15 to 35°C.

2.  The process according to claim 1, where the moisture content of the educt, based on the total weight of the educt and determined on the basis of the moisture escaping from the educt heated to 160°C, is not more than 1% by weight.

3.  The process according to claim 1 or 2, where the temperature of that area of the agglomeration tool used for the agglomeration that comes into contact with the material during the agglomeration is in the range from 200 to 240°C.

4.  The process according to at least one of the preceding claims, where the educt is transported to the agglomeration tool used for the agglomeration by way of a conveying screw whose flight depth for a throughput of 250 kg/h is in the range from 5 to 15 mm.

5.  The process according to claim 4, where the agglomeration tool is a hollow cylinder with an element rotating therein.

6.  The process according to at least one of the preceding claims, where the polyarylene (ether) sulfone is amorphous.

7.  A particle obtainable from the process according to any one of claims 1-6, comprising polyarylene (ether) sulfone whose C* value is below 15 determined according to CieLab spin measurement and where at least 60% by weight of the particles have a particles size ($d_{50}$ value) in the range from 2 mm to 3.5 mm determined from dynamic image analysis.

8.  The particle comprising polyarylene (ether) sulfone according to claim 7, where the polyarylene (ether) sulfone is polyphenylene ether sulfone.

9.  The use of the particles comprising polyarylene (ether) sulfone according to either of claims 7 and 8 or produced by the process according to any of claims 1 to 6 in the production of a coating, of a film, of foam, of a foil, a membrane, or of a molding.

10. A coating, a film or foam, a foil or membrane, or a molding obtained using particles comprising polyarylene (ether) sulfone according to either of claims 7 and 8 or produced by the process according to any of claims 1 to 6.

11. The molding according to claim 10 which in respect of at least 50% of its surface, based on the total surface area of the molding, is composed of one or more walls whose wall thickness is below 2 mm, where the wall thickness may be determined according to DIN 16810 2014-7-1.

12. A process for the recycling of a foam, of a foil or membrane, or of a molding, or of edge trim from the production of a coating, of a foam, of a foil or membrane, or of a molding according to claim 10 or 11 comprising the production of comminuted material therefrom and the agglomeration to give recyclate particles by the process according to at least one of claims 1 to 6.

13. The process for recycling according to claim 12, where edge trim is agglomerated to give recyclate particles.


**Patentansprüche**

1. Verfahren zur Herstellung von Partikeln, die Polyarylen(ether)sulfon umfassen, umfassend die Agglomeration eines feinteiligen Materials, das Polyarylen(ether)sulfon (Edukt) umfasst, wobei (i) der Feuchtegehalt des Edukts, bezogen auf das Gesamtgewicht des Edukts und bestimmt auf Grundlage der Feuchte, die aus dem auf 160 °C erhitzten Ausgangsmaterial entweicht, nicht mehr als 2 Gew.-% beträgt, (ii) der Feuchtegehalt der Umgebungsluft, die von außen in die für die Agglomeration verwendete Vorrichtung eingebracht wird, bestimmt unter Verwendung eines Hygrometers, 40 bis 80 % beträgt, und (iii) die Temperatur der Umgebungsluft, bestimmt an der Stelle der Einführung der Umgebungsluft in die Vorrichtung, 15 bis 35 °C beträgt.

2. Verfahren nach Anspruch 1, wobei der Feuchtegehalt des Edukts, bezogen auf das Gesamtgewicht des Edukts und bestimmt auf Grundlage der Feuchte, die aus dem auf 160 °C erhitzten Edukt entweicht, nicht mehr als 1 Gew.-% beträgt.

3. Verfahren nach Anspruch 1 oder 2, wobei die Temperatur desjenigen Bereichs des zur Agglomeration verwendeten Agglomerationswerkzeugs, der während der Agglomeration mit dem Material in Kontakt kommt, im Bereich von 200 bis 240 °C liegt.

4. Verfahren nach mindestens einem der vorangehenden Ansprüche, wobei das Edukt zu dem für die Agglomeration verwendeten Agglomerationswerkzeug mittels einer Förderschnecke transportiert wird, deren Flugtiefe bei einem Durchsatz von 250 kg/h im Bereich von 5 bis 15 mm liegt.

5. Verfahren nach Anspruch 4, wobei das Agglomerationswerkzeug ein Hohlzylinder mit einem darin rotierenden Element ist.

6. Verfahren nach mindestens einem der vorangehenden Ansprüche, wobei das Polyarylen(ether)sulfon amorph ist.

7. Partikel, erhältlich nach dem Verfahren gemäß einem der Ansprüche 1-6, umfassend Polyarylen(ether)sulfon, dessen C*-Wert unter 15 liegt, bestimmt gemäß CieLab-SPIN-Messung, und wobei mindestens 60 Gew.-% der Partikel eine Partikelgröße (d50-Wert) im Bereich von 2 mm bis 3,5 mm aufweisen, bestimmt mittels dynamischer Bildanalyse.

8. Partikel umfassend Polyarylen(ether)sulfon nach Anspruch 7, wobei das Polyarylen(ether)sulfon Polyphenylenether-sulfon ist.

9. Verwendung der Partikel umfassend Polyarylen(ether)sulfon nach einem der Ansprüche 7 und 8 oder hergestellt nach dem Verfahren gemäß einem der Ansprüche 1-6 zur Herstellung einer Beschichtung, eines Films, eines Schaums, einer Folie, einer Membran oder eines Formteils.

10. Beschichtung, Film oder Schaum, Folie oder Membran oder Formteil, erhalten unter Verwendung von Partikeln umfassend Polyarylen(ether)sulfon nach einem der Ansprüche 7 und 8 oder hergestellt nach dem Verfahren gemäß einem der Ansprüche 1-6.

11. Formteil nach Anspruch 10, das hinsichtlich mindestens 50 % seiner Oberfläche, bezogen auf die Gesamtoberfläche des Formteils, aus einer oder mehreren Wänden zusammengesetzt ist, deren Wanddicke unter 2 mm liegt, wobei die Wanddicke gemäß DIN 16810 2014-7-1 bestimmt werden kann.

**12.** Verfahren zum Recycling eines Schaums, einer Folie oder Membran oder eines Formteils oder von Randbeschnitt aus der Herstellung einer Beschichtung, eines Schaums, einer Folie oder Membran oder eines Formteils nach Anspruch 10 oder 11, umfassend die Herstellung eines zerkleinerten Materials daraus und die Agglomeration zur Bildung von Rezyklat-Partikeln nach dem Verfahren gemäß mindestens einem der Ansprüche 1-6.

**13.** Recyclingverfahren nach Anspruch 12, wobei Randbeschnitt zur Bildung von Rezyklat-Partikeln agglomeriert wird.


**Revendications**

**1.** Procédé de production de particules comprenant une sulfone de polyarylène (éther), comprenant l'agglomération d'un matériau à particules fines comprenant une sulfone de polyarylène (éther) (matière de départ), dans lequel : (i) la teneur en humidité de la matière de départ, rapportée au poids total de la matière de départ et déterminée sur la base de l'humidité s'échappant du matériau de départ chauffé à 160 °C, n'est pas supérieure à 2 % en poids, (ii) la teneur en humidité de l'air ambiant introduit de l'extérieur dans l'appareil utilisé pour l'agglomération, déterminée à l'aide d'un hygromètre, est comprise entre 40 et 80 %, et (iii) la température de l'air ambiant, déterminée au point d'introduction de l'air ambiant dans l'appareil, est comprise entre 15 et 35 °C.

**2.** Procédé selon la revendication 1, dans lequel la teneur en humidité de la matière de départ, rapportée au poids total de la matière de départ et déterminée sur la base de l'humidité s'échappant de la matière de départ chauffée à 160 °C, n'est pas supérieure à 1 % en poids.

**3.** Procédé selon la revendication 1 ou 2, dans lequel la température de la zone de l'outil d'agglomération utilisé pour l'agglomération qui entre en contact avec le matériau pendant l'agglomération est comprise entre 200 et 240 °C.

**4.** Procédé selon au moins une des revendications précédentes, dans lequel la matière de départ est transportée vers l'outil d'agglomération utilisé pour l'agglomération au moyen d'une vis de convoyage dont la profondeur de filet, pour un débit de 250 kg/h, est comprise entre 5 et 15 mm.

**5.** Procédé selon la revendication 4, dans lequel l'outil d'agglomération est un cylindre creux avec un élément en rotation à l'intérieur.

**6.** Procédé selon au moins une des revendications précédentes, dans lequel la sulfone de polyarylène (éther) est amorphe.

**7.** Particule susceptible d'être obtenue par le procédé selon l'une quelconque des revendications 1 à 6, comprenant une sulfone de polyarylène (éther) dont la valeur C* est inférieure à 15, déterminée selon une mesure SPIN CieLab, et dans laquelle au moins 60 % en poids des particules présentent une taille de particules (valeur d50) comprise entre 2 mm et 3,5 mm, déterminée par analyse d'image dynamique.

**8.** Particule comprenant une sulfone de polyarylène (éther) selon la revendication 7, dans laquelle la sulfone de polyarylène (éther) est une sulfone de polyphénylène éther.

**9.** Utilisation des particules comprenant une sulfone de polyarylène (éther) selon l'une quelconque des revendications 7 et 8, ou produites par le procédé selon l'une quelconque des revendications 1 à 6, pour la fabrication d'un revêtement, d'un film, d'une mousse, d'une feuille, d'une membrane ou d'un article moulé.

**10.** Revêtement, film ou mousse, feuille ou membrane, ou article moulé, obtenu au moyen de particules comprenant une sulfone de polyarylène (éther) selon l'une quelconque des revendications 7 et 8, ou produites par le procédé selon l'une quelconque des revendications 1 à 6.

**11.** Article moulé selon la revendication 10, dans lequel, pour au moins 50 % de sa surface, sur la base de la surface totale de l'article moulé, l'article moulé est constitué d'une ou de plusieurs parois dont l'épaisseur de paroi est inférieure à 2 mm, l'épaisseur de paroi pouvant être déterminée selon la norme DIN 16810 2014-7-1.

**12.** Procédé de recyclage d'une mousse, d'une feuille ou membrane, ou d'un article moulé, ou de chutes de bord issues de la production d'un revêtement, d'une mousse, d'une feuille ou membrane, ou d'un article moulé selon la revendication 10 ou 11, comprenant la production d'un matériau broyé à partir de ceux-ci et l'agglomération afin d'obtenir des particules de recyclat par le procédé selon au moins une des revendications 1 à 6.

13. Procédé de recyclage selon la revendication 12, dans lequel les chutes de bord sont agglomérées afin d'obtenir des particules de recyclat.

Fig. 1: Inventive examples A2 and comparative examples VA2 and VA3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 548683 A1
- EP 548684 A1
- EP 640640 A1
- EP 3573800 B1
- WO 2020053077 A1
- CN 106750302 A
- US 2016152776 A1
- WO 2018137998 A1
- DE 1454873
- DE 1454875
- EP 373372 A
- DE 102005018733

### Non-patent literature cited in the description

- Encyclopedia of Polymer Science and Technology. **HERMAN F. MARK**. Polysulfones. 2003, vol. 4
- Aromatic Polyethers. **HANS R. KRICHELDORF**. Handbook of Polymer Synthesis. 2005, 427-443